Europäisches Patentamt

European Patent Office

Office européen des brevets

(19)

(11) EP 0 798 323 A1

(12) EUROPÄISCHE PATENTANMELDUNG

(43) Veröffentlichungstag:
01.10.1997 Patentblatt 1997/40

(51) Int. Cl.⁶: **C08G 18/67**, C09D 175/16

(21) Anmeldenummer: 97104848.3

(22) Anmeldetag: 21.03.1997

(84) Benannte Vertragsstaaten:
AT BE CH DE DK ES FR GB GR IE IT LI NL PT SE

(30) Priorität: 26.03.1996 DE 19611812

(71) Anmelder: Herberts Gesellschaft
mit beschränkter Haftung
42285 Wuppertal (DE)

(72) Erfinder:
• Vogt-Birnbrich, Bettina, Dr.
42719 Solingen (DE)
• Göbel, Armin
58300 Wetter (DE)

(74) Vertreter: Türk, Gille, Hrabal, Leifert
Brucknerstrasse 20
40593 Düsseldorf (DE)

(54) **Wasserverdünnbare Dispersion, Verfahren zu ihrer Herstellung und Überzugsmittel darauf**

(57) Die Erfindung betrifft eine wasserverdünnbare Dispersion eines oder mehrerer kationisch modifizierter und urethanmodifizierter (Meth)acrylcopolymere, die durch Lösungspolymerisation von radikalisch polymerisierbaren ungesättigten Monomeren oder einem Gemisch solcher Monomerer hergestellt werden. Die Überzugsmittel auf Basis dieser Dispersion eignen sich insbesondere für die Erzeugung von Basisschichten in Mehrschichtüberzügen, insbesondere in der Fahrzeug- und Fahrzeugteilelackierung.

EP 0 798 323 A1

**Beschreibung**

Die Erfindung betrifft wäßrige Dispersionen von modifizierten Poly(meth)acrylatharzen, die zur Herstellung wasserverdünnbarer Überzugsmittel, insbesondere für die Erzeugung von Basisschichten in Mehrschichtüberzügen geeignet sind. Die Überzugsmittel finden bevorzugt Anwendung in der Fahrzeug- und Fahrzeugteilelackierung.

Aus ökologischen Gründen ist man bemüht, in der Fahrzeuglackierung, aber auch in anderen Bereichen der Industrielackierung einen hohen Anteil an organischen Lösungsmitteln in den Überzugsmitteln zu vermeiden. Es wurden daher Überzugsmittel entwickelt, die als Lösungs- und Dispergiermittel überwiegend Wasser und nur noch geringe Mengen organischer Lösemittel enthalten.

Um den Bindemitteln die notwendige Wasserverdünnbarkeit zu verleihen, werden diese mit zur Salzbildung fähigen funktionellen Gruppen modifiziert. Nach Neutralisation dieser funktionellen Gruppen kann die Überführung in die Wasserphase erfolgen. Die Modifizierung mit kationisch stabilisierenden Gruppen hat dabei gegenüber der Stabilisierung mit anionischen Gruppen den Vorteil, daß zur Neutralisation keine flüchtigen Amine eingesetzt werden müssen, die bei der Filmbildung wieder frei werden.

Derartige kationisch stabilisierte Überzugsmittel sind bekannt. So werden beispielsweise in der EP-A-0 452 786 Wasserbasislacke beschrieben, die auf kationisch modifizierten Poly(meth)acrylat-, Polyester-, Polyurethan- oder Polyurethan-Harnstoffharzen beruhen. Die Bindemittel können auch in Kombination eingesetzt werden. In derartigen Bindemittelkombinationen, z.B. in Kombinationen von Polyurethan- und Poly(meth)acrylatharzen, kommt es jedoch zu Unverträglichkeiten, was sich in mangelnder Zwischenschichthaftung und mangelnder Elastizität der aus diesen Bindemitteln erhaltenen Überzüge auswirkt.

In der EP-A-0 183 119 werden kationisch und anionisch modifizierte Bindemittel beschrieben, welche erhalten werden durch Emulsionspolymerisation ethylenisch ungesättigter Monomere in Anwesenheit einer wäßrigen Dispersion von Oligourethanen, die ionisierbare Gruppen, bevorzugt Carboxylgruppen, und ungesättigte Endgruppen enthalten. Die Bindemittel können in wasserverdünnbaren Lacken eingesetzt werden.

In der EP-A-0 98 752 sind wasserverdünnbare Polyurethandispersionen mit kationischen oder anionischen Gruppen im Makromolekül genannt, die durch Emulsionspolymerisation hergestellt werden, indem in einem ersten Schritt eine Mischung aus einem Diol mit in anionische oder kationische Gruppen überführbaren Gruppen und einem Makroglykol mit einem Überschuß an Diisocyanat reagiert, das so erhaltene NCO-Prepolymer mit einem Hydroxyalkylester der Acrylsäure oder Methacrylsäure umgesetzt wird, das Oligourethan einer Salzbildung unterworfen wird und anschließend in wäßriger Dispersion in Gegenwart ungesättigter Monomere polymerisiert wird.

Nachteile der in den beiden letzteren Anmeldungen genannten Polyurethandispersionen sind ihre schlechte Pigmentbenetzung in Lackformulierungen und damit unzureichende Stabilität der fertigen Überzugsmittel. Außerdem wirken sich die hohen Molmassen der Emulsionspolymerisate negativ auf die Filmbildung aus.

Aufgabe der Erfindung war es daher, kationisch modifizierte Bindemittel bereitzustellen, die mit anderen Bindemitteln gut verträglich sind und stabile wasserverdünnbare Dispersionen ergeben. Sie sollen für wasserverdünnbare Überzugsmittel geeignet sein, die sich durch gute Filmbildung, ausreichende Pigmentstabilität und gute Zwischenschichthaftung in der Mehrschichtlackierung auszeichnen und außerdem einen guten Metallic-Effekt ergeben.

Die Aufgabe wird gelöst durch wasserverdünnbare Dispersionen eines oder mehrerer kationisch modifizierter und urethanmodifizierter (Meth)acrylcopolymerer, welche erhalten werden durch Lösungspolymerisation von

A) radikalisch polymerisierbaren ungesättigten Monomeren oder einem Gemisch radikalisch polymerisierbarer ungesättigter Monomere, die gegebenenfalls mit kationischen oder in kationische Gruppen überführbaren Gruppen modifiziert sind in Gegenwart

B) eines oder mehrerer Polyurethanmakromonomerer mit ungesättigten Gruppen, wobei das Polyurethanmakromonomer erhalten wird durch Umsetzung

a1) eines oder mehrerer gegebenenfalls polymerisierbare Doppelbindungen aufweisender Mono- und/oder Polyhydroxylverbindungen mit

a2) einem oder mehreren Polyisocyanaten,

a3) gegebenenfalls einer Verbindung, die mindestens eine gegenüber Isocyanatgruppen reaktive und mindestens eine zur Kationenbildung befähigte Gruppe im Molekül aufweisen oder mit einem Gemisch aus solchen Verbindungen,

a4) gegebenenfalls einer Verbindung, die neben einer polymerisierbaren Doppelbindung mindestens eine gegenüber NCO-Gruppen reaktive Gruppe enthält oder mit einem Gemisch aus solchen Verbindungen und

a5) gegebenenfalls einer Verbindung, die eine gegenüber Isocyanatgruppen reaktive Gruppe und einen linearen oder verzweigten (cyclo)aliphatischen Kohlenwasserstoffrest mit 5 bis 20 C-Atomen enthält oder einem Gemisch aus solchen Verbindungen,

wobei die Komponenten a1) bis a5) so ausgewählt werden, daß ein Polyurethanmakromonomer mit terminalen und/oder lateralen ungesättigten Gruppen entsteht und die kationischen oder in kationische Gruppen überführbaren Gruppen des urethanmodifizierten (Meth)acrylcopolymeren über die radikalisch polymerisierbaren ungesättigten Monomere A) und/oder das Polyurethanmakromonomer B) eingeführt werden.

Der Begriff (Meth)acryl soll hier und im folgenden stehen für Acryl und/oder Methacryl und der Begriff (cyclo)aliphatisch für aliphathisch und/oder cycloaliphatisch. Unter dem Begriff Polyurethanmakromonomer sind Polyurethanoligomere, die polymerisierbare Gruppen aufweisen, zu verstehen.

Die Erfindung betrifft außerdem wasserverdünnbare Überzugsmittel, enthaltend

C) wasserverdünnbare Dispersionen eines oder mehrerer der vorstehend genannten urethanmodifizierten und mit kationischen oder in kationische Gruppen überführbaren Gruppen modifizierter (Meth)acrylcopolymerer (Reaktionsprodukt aus A) und B)), gegebenenfalls in Kombination mit anderen wasserverdünnbaren kationisch modifizierten Bindemitteln,

D) Wasser und

E) gegebenenfalls organische Lösemittel, Pigmente und/oder Füllstoffe sowie lackübliche Additive.

Die erfindungsgemäßen Dispersionen und urethanmodifizierter (Meth)acrylcopolymerer werden hergestellt, indem Polyurethanmakromonomere mit ungesättigten Gruppen, gegebenenfalls in einem organischen Lösemittel oder Lösemittelgemisch, vorgelegt werden und in Gegenwart dieser Polyurethanmakromonomeren radikalisch polymerisierbare ungesättigte Monomere oder ein Gemisch radikalisch polymerisierbarer ungesättigter Monomere polymerisiert werden. Während der Polymerisation kommt es zur Bildung von Copolymeren aus den ungesättigten Polyurethanmakromonomeren und den radikalisch polymerisierbaren ungesättigten Monomeren. Bei der Polymerisation kann es auch zu Pfropfungsreaktionen zwischen dem Polyurethanmakromonomer und den ungesättigten Monomeren kommen. Das erhaltene Reaktionsprodukt aus A) und B) wird anschließend neutralisiert und in eine wäßrige Dispersion überführt.

Vorzugsweise werden 60 bis 95 Gew.-% der radikalisch polymerisierbaren ungesättigten Monomere in 5 bis 40 Gew.-% Polyurethanmakromonomer polymerisiert, wobei sich die Gew.-% auf den Festkörpergehalt beziehen und zu 100 % addieren.

Als radikalisch polymerisierbare Monomere sind praktisch alle ethylenisch ungesättigten Monomere geeignet, wie sie für die radikalische Polymerisation geläufig sind und die beispielsweise dem Q- und e-Schema nach Alfrey und Price für die Copolymerisation entsprechen (vergleiche Brandrup und Immergut, Polymer Handbuch, 2nd edition, John Wiley and Sons, New York 1975).

Es können ungesättigte Monomere mit funktionellen Gruppen, z.B. Hydroxylgruppen, Glycidylgruppen, Aminogruppen und Ethergruppen, sowie übliche ungesättigte Monomere ohne weitere funktionelle Gruppen eingesetzt werden.

Olefinisch ungesättigte Monomere mit Hydroxylgruppen sind beispielsweise Hydroxyalkylester oder Hydroxyarylester ungesättigter Carbonsäuren. Bevorzugt sind es Hydroxyalkylester der Acrylsäure oder Methacrylsäure mit aliphatischen Diolen mit 2 bis 20 C-Atomen. Beispiele für derartige Hydroxyalkylester mit einer primären Hydroxylgruppe sind Hydroxyethyl(meth)acrylat, Hydroxypropyl(meth)acrylat, Hydroxybutyl(meth)acrylat, Hydroxyamyl(meth)acrylat, Neopentylglykolmonoacrylat, Hydroxyhexyl(meth)acrylat, Hydroxyoctyl(meth)acrylat. Beispiele für Hydroxyalkylester mit einer sekundären Hydroxylgruppe sind 2-Hydroxypropyl(meth)acrylat, 2-Hydroxybutyl(meth)acrylat, 3-Hydroxybutyl(meth)acrylat. Es können jedoch auch die entsprechenden Ester anderer ungesättigter Carbonsäuren wie z.B. der Crotonsäure oder der Isocrotonsäure eingesetzt werden.

Eine weitere Gruppe OH-funktioneller Monomere sind Hydroxyalkylamide ungesättigter Carbonsäuren wie z.B. der Acrylsäure, Methacrylsäure und Fumarsäure. Beispiele hierfür sind N-Hydroxyethylmethacrylsäureamid, N-(2-Hydroxypropyl)methacrylamid oder N-Hydroxyalkylfumarsäuremono- oder diamid. Gut geeignet sind auch Umsetzungsprodukte aus einem Mol Hydroxyalkyl(meth)acrylat und 2 Mol epsilon-Caprolacton und Addukte von (Meth)acrylsäure und Glycidylestern von gesättigten alpha, alpha-Dialkylalkanmonocarbonsäuren, beispielsweise Glycidylestern der Versaticsäure.

Andere hydroxylgruppenhaltige ungesättigte Verbindungen sind Allylalkohol, Monovinylether von Polyalkoholen, besonders von Diolen wie z.B. der Monovinylether des Ethylenglykols oder Butandiols, hydroxylgruppenhaltige Allylether oder -ester wie 2,3-Dihydroxyproplmonoallylether, Trimethylolpropanmonoallylether oder 2,3-Dihydroxypropansäureallylester sowie Glycerinmono(meth)acrylat.

Besonders geeignet sind Hydroxyethyl(meth)acrylat, Hydroxypropyl(meth)acrylat und Hydroxybutyl(meth)acrylat.

Geeignete ungesättigte Monomere ohne weitere funktionelle Gruppen sind beispielsweise Ester ungesättigter Monocarbonsäuren mit aliphatischen einwertigen verzweigten oder unverzweigten sowie cyclischen Alkoholen mit 1 bis 20 C-Atomen. Bevorzugt handelt es sich um Ester der Acrylsäure oder Methacrylsäure. Beispiele für Ester mit aliphatischen Alkoholen sind Methylacrylat, Ethylacrylat, Isopropylacrylat, tert.-Butylacrylat, n-Butylacrylat, Isobutylacrylat, 2-Ethylhexylacrylat, Laurylacrylat, Stearylacrylat und die entsprechenden Methacrylate. Beispiele für Ester mit cyclischen Alkoholen sind Cyclohexyl(meth)acrylat, Trimethylcyclohexyl(meth)acrylat, 4-tert.-Butylcyclohexyl(meth)acrylat und Isobornyl(meth)acrylat.

Weitere ungesättigte Monomere sind beispielsweise Styrol, alpha-Methylstyrol und Vinylester, wie Vinylacetat. Es können jedoch auch ethylenisch polyungesättigte Monomere eingesetzt werden. Das sind Monomere mit mindestens 2 radikalisch polymerisierbaren Doppelbindungen. Beispiele hierfür sind Divinylbenzol, 1,4-Butandioldiacrylat, 1,6-Hexandioldiacrylat, Neopentylglykoldimethacrylat, Glycerindimethacrylat.

Sollen die in kationische Gruppen überführbaren Gruppen über die radikalisch polymerisierbaren Monomere in das Reaktionsprodukt aus A) und B) eingeführt werden, sind entsprechende ungesättigte Monomere mit basischen Gruppen zu verwenden. Bevorzugt sind dabei aminogruppenhaltige ungesättigte Monomere. Es können jedoch auch Monomere mit Oniumgruppen eingesetzt werden.

Als aminogruppenhaltige Monomere können beispielsweise Monomere der allgemeinen Formel

$$R - CH = CH'-X-A-N(R'')_2$$

eingesetzt werden, wobei

R $\quad$ = -R' oder -X-$C_nH_{2n+1}$,
R' $\quad$ = -H oder -$C_nH_{2n+1}$ und
R'' $\quad$ = -R', -$C_nH_{2n}OH$ und/oder -$C_nH_{2n}NR_2$ bedeuten, wobei R wie vorstehend definiert ist,
X $\quad$ = -COO-, -CONH-, -$CH_2O$- oder -O-,
A $\quad$ = -$C_nH_{2n}$- oder -$C_nH_{2n}$-$CHOH$-$CH_2$ und
n $\quad$ = 1 bis 8, bevorzugt 1 bis 3 bedeuten.

Beispiele für ungesättigte N-gruppenhaltige Monomere sind N-Dialkyl- oder N-Monoalkylaminoalkyl(meth)acrylate oder die entsprechenden N-Alkanol-Verbindungen wie beispielsweise N-Diethylaminoethylacrylat oder N-tert.-Butylaminoethylacrylat, N-Dialkyl- oder N-Monoalkylaminoalkyl(meth)acrylamid oder die entsprechenden N-Alkanol-Verbindungen wie beispielsweise N-Dimethylaminoethanolacrylamid und/oder Vinylgruppen enthaltende heterocyclische Verbindungen mit einem oder mehreren basischen Stickstoffatomen wie beispielsweise N-Vinylimidazol.

Das Polyurethanmakromonomer B) hat bevorzugt ein zahlenmittleres Molekulargewicht Mn von 2000 - 20000, besonders bevorzugt von 3000 - 8000 und weist im statistischen Mittel pro Molekül 0,2 - 1,5, bevorzugt 0,8 - 1,1 polymerisierbare Doppelbindungen auf. Das Polyurethanmakromonomer besitzt bevorzugt eine Aminzahl von 0 - 100, besonders bevorzugt von 30 - 70 mg KOH/g und eine OH-Zahl von 0 - 150 mg KOH/g. Entsprechend der gewünschten Amin- und OH-Zahlen werden Art und Menge der Ausgangsverbindungen ausgewählt.

Das Polyurethanmakromonomer kann durch gleichzeitige Umsetzung aller Ausgangsverbindungen in Lösung oder Schmelze hergestellt werden. Es ist jedoch auch möglich, das Makromonomer stufenweise herzustellen.

Als Komponente b1) können gesättigte und/oder ungesättigte Polyhydroxypolyester, Polyhydroxypolyether, Polyhydroxypolycarbonate, Polyhydroxypolyurethane, Polyhydroxypolybutadiene, Polyhydroxypolyacrylate und Polyhydroxycarbonsäuren eingesetzt werden. Bevorzugt handelt es sich bei diesen Verbindungen um Dihydroxyverbindungen mit einer Hydroxylzahl von bevorzugt 25 - 200, besonders bevorzugt von 40 - 150 mg KOH/g.

Die Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Die Dicarbonsäuren und Diole können lineare oder verzweigte aliphatische, cycloaliphatische oder aromatische Dicarbonsäuren oder Diole sein. Bevorzugt werden lineare unverzweigte Polyester hergestellt. Diole können beispielsweise sein Alkylenglykole, wie Ethylenglykol, Propylenglykol, Butylenglykol, Butandiol-1,4, Hexandiol-1,6, Neopentylglykol und andere Diole, wie Dimethylolcyclohexan. Es können jedoch auch Polyole mit mehr als 2 Hydroxylgruppen, wie Trimethylolpropan, Glycerin, Pentaerythrit, verwendet werden. Geeignete Säuren sind beispielsweise niedermolekulare Dicarbonsäuren bzw. deren Anhydride mit 2 - 18 C-Atomen im Molekül. Geeignete Säuren sind beispielsweise Phthalsäure, Isophthalsäure, o-Phthalsäure, Terephthalsäure, Tetrahydrophthalsäure, Hexahydrophthalsäure, Bernsteinsäure, Azelainsäure, Sebazinsäure, Itaconsäure, Adipinsäure, Maleinsäure` Fumarsäure, Glutarsäure und Trimellithsäure. Es können auch die entsprechenden Anhydride eingesetzt werden.

Es können auch Polyhydroxypolyester verwendet werden, die sich von Lactonen ableiten. Diese Verbindungen erhält man beispielsweise durch Umsetzung eines Lactons mit einem Polyol. Bevorzugtes Lacton ist das epsilon-Caprolacton. Zur Umsetzung geeignete Polyole sind beispielsweise Ethylenglykol, 1,3-Propandiol, 1,4-Butandiol, Hexandiol-1,6, Trimethylolpropan und Pentaerythrit.

Als Polyhydroxypolyether kommen Verbindungen der allgemeinen Formel

$$H-(-O(CHR)_n-)_mOH$$

in Frage, in der R Wasserstoff oder ein niederer Alkylrest, gegebenenfalls mit verschiedenen Substituenten, n eine Zahl von 2 - 6 und m eine Zahl von 400 - 5000 ist. Beispiele hierfür sind Poly(oxytetramethylen)glykole, Poly(oxyethylen)glykole und Poly(oxypropylen)glykole.

Als Polyhydroxyverbindungen b1) können auch Polycarbonatpolyole eingesetzt werden. Diese OH-funktionellen Polycarbonate lassen sich durch Umsetzung von Polyolen, wie Propandiol-1,3, Butandiol-1,4, Hexandiol-1,6, Diethylenglykol, Triethylenglykol, 1,4-Bishydroxymethylcyclohexan, Neopentylglykol, Trimethylolpropan, Pentaerythrit, mit Dicarbonaten, wie Dimethyl-, Diethyl- oder Diphenylcarbonat, oder Phosgen herstellen.

Als Polyhydroxyverbindungen b1) können anteilsweise auch niedrigmolekulare Polyole mit einer Molmasse von beispielsweise 90 - 350 eingesetzt werden. Beispiele hierfür sind Ethylenglykol, Butylenglykol, Neopentylglykol` 1,4-Butandiol, 1,6-Hexandiol, Dimethylolpropan und hydroxyethyliertes oder hydroxypropyliertes Bisphenol A oder Bisphenol F.

Die Polyhydroxyverbindungen b1) können einzeln oder im Gemisch eingesetzt werden.

Wenn über die Komponente b1) polymerisierbare Doppelbindungen in das Polyurethanmakromonomer eingeführt werden sollen, dann müssen als a1) solche Verbindungen eingesetzt werden, die polymerisierbare Doppelbindungen enthalten, d.h. die entsprechenden Polyesterdiole müssen anteilsmäßig aus polymerisierbare Doppelbindungen enthaltenden Polyolen und/oder Polycarbonsäuren hergestellt werden. Beispiele für Polyole mit einer polymerisierbaren Doppelbindung sind Trimethylolpropanmonoallylether, Glycerinmonoallylether und Pentaerthritmonoallylether. Beispiele für Polycarbonsäuren mit polymerisierbaren ungesättigten Gruppen sind Alkendicarbonsäuren und Maleinsäure. Es können auch die Umsetzungsprodukte von Carbonsäureanhydriden mit langkettigen Olefinen eingesetzt werden. Beispiele hierfür sind die Umsetzungsprodukte von Maleinsäureanhydrid mit Olefinen mit 6 - 20 C-Atomen, wie z.B. das Umsetzungsprodukt von Maleinsäureanhydrid mit Dodecen.

Als Komponente b2) können übliche aliphatische, cycloaliphatische und/oder aromatische Polyisocyanate eingesetzt werden. Die Polyisocyanate können auch sterisch gehindert sein. Beispiele für aliphatische Polyisocyanate sind Trimethylendiisocyanat, Propylendiisocyanat, Tetramethylendiisocyanat, Pentamethylendiisocyanat, Hexamethylendiisocyanat, 1,1,6,6-Tetramethylhexamethylendiisocyanat, p- oder m-Tetramethylxylylendiisocyanat. Beispiele für cycloaliphatische Polyisocyanate sind Isophorondiisocyanat, Dicyclohexylmethandiisocyanat, 3-Isocyanatomethyl-1-methylcyclohexylisocyanat. Beispiele für die weniger bevorzugten aromatischen Polyisocyanate sind 1,3- und 1,4-Phenylendiisocyanat, Xylylendiisocyanat, Diphenylmethyldiisocyanat, Toluylendiisocyanat. Neben Diisocyanaten können auch anteilsweise Polyisocyanate höherer Funktionalität, z.B. Triisocyanate verwendet werden. Beispiele hierfür sind die durch Trimerisierung von Diisocyanaten oder durch Reaktion von Diisocyanaten mit polyfunktionellen OH- oder NH-Gruppen enthaltenden Verbindungen erhaltenen Triisocyanate, wie das Isocyanurat von Hexamethylendiisocyanat oder das Addukt von Isophorondiisocyanat und Trimethylolpropan.

Die Komponente b3) dient zur Einführung von zur Kationenbildung befähigten Gruppen in das Polyurethanmakromonomer. Die Menge an Komponente b4) ergibt sich aus der angestrebten Aminzahl. Geeignete gegegenüber Isocyanat reaktive Gruppen sind insbesondere Hydroxylgruppen. Geeignete zur Kationenbildung befähigte Gruppen sind primäre, sekundäre und tertiäre Aminogruppen und/oder Oniumgruppen, wie quaternäre Ammoniumgruppen, quaternäre Phosphoniumgruppen und/oder tertiäre Sulfoniumgruppen. Bevorzugt werden Dialkylaminogruppen. Beispiele für Komponente a3) sind niedermolekulare aliphatische Diole wie N-Alkyl-dialkanolamin, wobei als Alkyl- oder Alkanrest aliphatische oder cycloaliphatische Reste mit 1 - 10 C-Atomen verwendet werden. Die Alkylgruppe kann z.B. eine Methyl-, Ethyl-, Butyl- oder Cyclohexylgruppe sein. Der Alkanolrest besteht z.B. aus Ethanol, Isopropanol, Butanol oder Cyclohexanol. Geeignete Beispiele sind N-Methyldiethanolamin, N-Methyldiisopropanolamin, 1,2-Propandiol-3-dimethylamin, 2-Diethylamino-1,2-propandiol.

Die Komponente b4) dient im wesentlichen zur Einführung von polymerisierbaren Doppelbindungen in das Polyurethanmakromonomer. Dazu werden Verbindungen eingesetzt, die neben einer polymerisierbaren Doppelbindung noch mindestens eine gegenüber NCO-Gruppen reaktive Gruppe enthalten. Solche reaktiven Gruppen sind beispielsweise -OH, SH-, NH- und NH2-Gruppen. Es können Makromonomere mit lateralen und/oder terminalen Vinylgruppen hergestellt werden. Makromonomere mit terminalen Vinylgruppen, d.h. Vinylgruppen, die am Anfang oder Ende der Polymerkette hängen, werden erhalten, wenn ungesättigte Monomere mit einer gegenüber Isocyanatgruppen reaktiven Gruppe eingebaut werden. Beispiele hierfür sind Umsetzungsprodukte aus Monoepoxiden und alpha,beta-ungesättigten Carbonsäuren wie etwa Reaktionsprodukte aus Versaticsäureglycidylester und (Meth)acrylsäure, Umsetzungsprodukte aus alpha,beta-ungesättigten Glycidylestern bzw. -ethern mit Monocarbonsäuren, beispielsweise Reaktionsprodukte aus Glycidylmethacrylat und Stearinsäure oder Leinölfettsäure und ferner (Meth)acrylate mit primären oder sekundären Aminogruppen.

Sehr gut geeignet sind dabei auch Hydroxyalkyl(meth)acrylate, wie Hydroxyethyl-, Hydroxypropyl-, Hydroxybutyl- und Hydroxyhexyl(meth)acrylat.

Makromonomere mit lateralen Vinylgruppen, d.h. Vinylgruppen die nicht am Anfang oder Ende der Polymerkete hängen, sondern dazwischen eingebaut sind, werden erhalten, wenn ungesättigte Monomere mit mindestens zwei gegenüber Isocyanatgruppen reaktiven Gruppen eingebaut werden. Beispiele für solche Monomere sind Trimethylolpropanderivate, wie z.B. Trimethylolpropanmonoallylether, Trimethylolpropanmono(meth)acrylat, Addukte von alpha,beta-ungesättigten Carbonsäuren, wie (Meth)acrylsäure, an Diepoxide, z.B. Bisphenol-A-diglycidylether, Hexandioldiglycidylether, Addukte von Dicarbonsäuren, wie z.B. Adipinsäure, Terepthalsäure oder dergleichen an (Meth)acrylsäurediglycidylester und Monovinylether von Polyolen, z.B. Glycerinmonoallylether, Pentaerythritmonoallylether. Gut geeignet sind ebenfalls Dihydroxyalkylester der (Meth)acrylsäure, wie z.B. 2,3-Dihydroxypropyl(meth)acrylat und Verbindungen wie Glycerinmono(meth)acrylat oder Pentaerythritmono(meth)acrylat.

Mit der Komponente b5) können zusätzlich hydrophobe Anteile in das Polyurethanmakromonomer eingeführt werden. Das geschieht, indem durch eine Verbindung, die eine gegenüber Isocyanatgruppen reaktive Gruppe und einen linearen oder verzweigten (cyclo)aliphatischen Kohlenwasserstoffrest mit 5 - 30 C-Atomen, bevorzugt 8 - 16 C-Atomen enthält, endständige aliphatische Ketten in das Polyurethanmakromonomer eingebaut werden. Als isocyanatreaktive Gruppen kommen primäre oder sekundäre Hydroxylgruppen oder eine sekundäre Aminogruppe in Frage. Besonders bevorzugt werden langkettige Monofettalkohole und/oder Monofettamine eingesetzt. Beispiele hierfür sind n-Hexylalkohol, n-oder iso-Octylalkohol, Isononanol, Laurylalkohol, Cetylalkohol, Staerylalkohol, Cerylalkohol, n-Hexylamin, n-Octylamin, Laurylamin. Es können auch Mischungen der genannten Alkohole und Amine eingesetzt werden.

Die radikalische Polymerisation der ungesättigten Monomere A) in dem Polyurethanmakromer B) wird als radikalische Lösungspolymerisation, wie sie im Stand der Technik üblich ist, durchgeführt. Das geschieht beispielsweise bei Temperaturen von 80 - 150°C. Es können geringe Mengen an organischen Lösemitteln zugesetzt werden. Dabei können alle für die Lösungspolymerisation üblichen Lösemittel eingesetzt werden. Bevorzugt werden jedoch wassermischbare organische Lösemittel, beispielsweise Glykole, wie Butylglykol, Ethylenglykol, Propylenglykol, Glykolether oder -ester, wie Diethylenglykoldialkylether, Dipropylenglykoldialkylether, Glykolether des Ethylen- und Propylenglykols, Alkohole, wie 2-Methoxypropanol, Ethoxypropanol, n-Butanol, n-Propanol und Ketone wie Aceton, Methylethylketon, Diethylketon, Methylisobutylketon eingesetzt.

Die Polymerisationsreaktion kann mit bekannten Polymerisationsinitiatoren gestartet werden.

Beispiele für bevorzugt eingesetzte Initiatoren für die Polymerisation sind: Dialkylperoxide, wie Di-tert.-Butylperoxid, Di-cumylperoxid; Diacylperoxide, wie Di-benzoylperoxid, Di-lauroylperoxid, Perester, wie tert.-Butyl-perbenzoat, tert.-Butylperpivalat, Hydroperoxide, wie Cumolhydroperoxid, Azoverbindungen, wie Azo-bis-cyclohexancarbonitril, Azo-bis-isobutyronitril.

Nach der Polymerisation der ungesättigten Monomere A) in Gegenwart des Polyurethanmakromeren B) erfolgt die Überführung des Reaktionsproduktes aus A) und B) in eine wäßrige Dispersion. Dazu werden die im Reaktionsprodukt enthaltenen zur Kationenbildung befähigten Gruppen vor oder während der Überführung in die Wasserphase mit Säuren ganz oder teilweise neutralisiert. Geeignete Säuren sind beispielsweise organische Monocarbonsäuren. Beispiele hierfür sind Ameisensäure, Essigsäure, Propionsäure. Gut geeignet sind auch Hydroxycarbonsäuren, wie z.B. Milchsäure, Glykolsäure, Apfelsäure, Ascorbinsäure, Zitronensäure, Mandelsäure, Weinsäure, Hydroxypropionsäure` Dimethylolpropionsäure.

Besonders vorteilhaft ist die Neutralisation mit nicht-flüchtigen Säuren. Die Säuren verbleiben im Lackfilm und werden bei der Filmbildung nicht an die Umgebung freigesetzt. Obwohl der Einsatz von nicht-flüchtigen Neutralisationsmitteln auf Grund der entstehenden hydrophilen Störstellen im Lackfilm als nicht vorteilhaft angesehen wird, konnten bei Verwendung nicht-flüchtiger Säuren keine negativen Einflüsse festgestellt werden. Als nicht-flüchtige Säure wird bevorzugt Dimethylolpropionsäure eingesetzt.

Der Gehalt an zur Kationenbildung befähigten Gruppen im urethanmodifizierten (Meth)acrylcopolymer (aus den Komponenten A) und B) hergestelltes Reaktionsssprodukt) soll eine Aminzahl von bevorzugt 10 - 100, besonders bevorzugt von 20 - 80 mg KOH/g ergeben. Die zur Kationenbildung befähigten Gruppen können dabei ausschließlich in der Komponente A) oder ausschließlich in der Komponente B) oder in beiden Komponenten enthalten sein.

Das urethanmodifizierte (Meth)acrylcopolymer hat eine OH-Zahl von 0 - 200, bevorzugt von 20 - 120, besonders bevorzugt von 40 - 100 mg KOH/g und ein zahlenmittleres Molekulargewicht von bevorzugt 3000 - 500000, besonders bevorzugt von 10000 - 100000.

Das urethanmodifizierte (Meth)acrylcopolymer enthält 5 - 99 Gew.-%, bevorzugt 25 - 95 Gew.-%, besonders bevorzugt 50 - 90 Gew.-% radikalisch polymerisierbare ungesättigte Monomere A) und 95 - 1 Gew.-%, bevorzugt 75 - 5 Gew.-%, besonders bevorzugt 50 - 10 Gew.-% Polyurethanmakromonomer B).

Nach der Dispersionsbildung können die gegebenenfalls enthaltenen Lösemittel abgetrennt werden. Die erhaltenen erfindungsgemäßen Dispersionen haben einen Festkörpergehalt von bevorzugt 25 - 50 Gew.-%. Es sind lagerstabile Dispersionen, die eine gute Verträglichkeit mit anderen Bindemitteln, beispielsweise anderen kationisch modifizierten Bindemitteln, aufweisen.

Aus den erfindungsgemäßen Dispersionen urethanmodifizierter (Meth)acrylcopolymerer können wasserverdünnbare Überzugsmittel hergestellt werden. Dazu werden den Dispersionen beispielsweise Pigmente, Füllstoffe, Additive, gegebenenfalls weitere Bindemittel und geringe Mengen an Lösemitteln zugesetzt.

Die im Überzugsmittel gegebenenfalls vorhandenen weiteren Bindemittelkomponenten können z.B. kationisch modifizierte Poly(meth)acrylat- und/oder Polyurethan- und/oder Polyesterharze sein. Derartige Harzkomponenten sind beispielsweise beschrieben in der EP-A-0 452 786. Als gegebenenfalls vorhandene weitere Bindemittelkomponenten kommen auch durch Emulsionspolymerisation hergestellte kationisch modifizierte acrylierte Polyurethane in Frage, wie sie beispielsweise in den EP-A-0 98 752 und EP-A-0 183 119 beschrieben sind. Es können jedoch auch nicht-ionische stabilisierte Bindemittel, beispielsweise mit eingebauten Polyethersegmenten, zusätzlich eingesetzt werden.

Beispiele hierfür sind Polyurethan- bzw. Polyurethanacrylatharze wie sie in den EP-A-0 354 261, EP-A-0 422 357 und EP-A-0 424 705 beschrieben sind.

Die aus den erfindungsgemäßen Bindemitteldispersionen hergestellten Überzugsmittel können verschiedene Vernetzer, wie beispielsweise Formaldehyd-Kondensationsharze, wie Phenol-Formaldehyd-Kondensationsharze und Amin-Formaldehydkondensationsharze, sowie blockierte und nicht blockierte Polyisocyanate enthalten. Die Vernetzer können einzeln und im Gemisch eingesetzt werden.

Es handelt sich dabei um die in der Lackindustrie üblichen Vernetzer, die in der Literatur umfassend beschrieben und im Handel erhältlich sind.

In den Überzugsmitteln können übliche anorganische und/oder organische Farbpigmente und/oder Füllstoffe sowie transparente Pigmente enthalten sein. Beispiele für anorganische oder organische Farbpigmente oder Füllstoffe sind Titandioxid, mikronisiertes Titandioxid, Eisenoxidpigmente, Ruß, Siliciumdioxid, Bariumsulfat, mikronisierter Glimmer, Talkum, Azopigmente, Phthalocyaninpigmente, Chinacridon- oder Pyrrolopyrrolpigmente.

Ebenso können in den Überzugsmitteln Effektpigmente enthalten sein. Die Effektpigmente zeichnen sich insbesondere durch einen plättchenartigen Aufbau aus. Beispiele für Effektpigmente sind: Metallpigmente, z.B. aus Aluminium, Kupfer oder anderen Metallen; Interferenzpigmente, wie z.B. metalloxidbeschichtete Metallpigmente, z.B. titandioxidbeschichtetes oder mischoxidbeschichtetes Aluminium, beschichteter Glimmer, wie z.B. titandioxidbeschichteter Glimmer und Graphiteffektpigmente.

Weiterhin können die Überzugsmittel lacktechnische Additive enthalten, beispielsweise rheologiebeeinflussende Mittel, wie hochdisperse Kieselsäure, Schichtsilikate oder polymere Harnstoffverbindungen. Als Verdicker wirken auch beispielsweise wasserlösliche Celluloseether sowie synthetische Polymere mit ionischen und/oder assoziativ wirkenden Gruppen wie modifizierte ethoxylierte Polyurethane oder Polyacrylate und Polypeptide. Daneben können auch Antiabsetzmittel, Verlaufsmittel, Lichtschutzmittel, Antischaummittel, wie beispielsweise silikonhaltige Verbindungen; Netzmittel sowie haftvermitttelnde Substanzen eingesetzt werden. Zum Beschleunigen der Härtung können gegebenenfalls Katalysatoren eingesetzt werden.

Als in geringen Mengen vorhandene Lösungsmittel sind übliche lacktechnische Lösungsmittel geeignet. Diese können von der Herstellung der Bindemittel stammen oder werden separat zugegeben. Es handelt sich dabei beispielsweise um solche organischen Lösemittel wie sie bereits vorstehend bei der Beschreibung der Lösungspolymerisation genannt wurden.

Die erfindungsgemäßen Überzugsmittel können nach an sich bekannten Methoden hergestellt werden. Gegebenenfalls werden der Festkörpergehalt, der pH-Wert und die Viskosität des Überzugsmittels in üblicher Weise eingestellt.

Die erfindungsgemäßen Bindemitteldispersionen sind besonders für die Herstellung von Überzugsmitteln für farbgebende und/oder effektgebende Basisschichten in einer Mehrschichtlackierung geeignet. Es ist jedoch auch möglich, andere Überzugsmittel z.B. Grundierungen, Füller oder Klarlacke daraus herzustellen. Dabei wird die Auswahl der Pigmente und Additive und ihre Konzentration dem jeweiligen Verwendungszweck angepaßt.

Die Überzugsmittel aus den erfindungsgemäßen Bindemitteldispersionen können je nach Wahl des Vernetzers als physikalisch trocknende oder vernetzende 1K- oder 2K-Systeme formuliert werden.

Die aus den erfindungsgemäßen Bindemitteldispersionen hergestellten wasserverdünnbaren Überzugsmittel können mittels Grundauffertigung oder mittels eines Modulsystems, wie es in der deutschen Anmeldung DE-A-44 15 292 beschrieben ist, hergestellt werden.

Die Erfindung betrifft auch ein Verfahren zur Herstellung eines Mehrschichtüberzuges, bei dem auf ein gegebenenfalls vorbeschichtetes Substrat eine farbige Basislackschicht mit dem erfindungsgemäßen Überzugsmittel aufgetragen wird. Auf diese Basislackschicht kann entweder nach Trocknung bzw. Härtung oder naß-in-naß, gegebenenfalls nach kurzem Ablüften, eine Klarlackschicht aufgetragen werden. Als Klarlack sind grundsätzlich alle bekannten nicht oder transparent pigmentierten Überzugsmittel geeignet. Nach dem Auftragen werden Klarlack- und Basislackschicht` bevorzugt gemeinsam, getrocknet bzw. gehärtet. Das geschieht bei Temperaturen von beispielsweise 20 - 150°C. Für Reparaturlackierungen sind Temperaturen von 20 - 80°C bevorzugt und für Zwecke der Serienlackierung Temperaturen von über 100°C. Die Applikation erfolgt nach üblichen Methoden, bevorzugt durch Spritzen.

Ein bevorzugtes Anwendungsgebiet der aus den erfindungsgemäßen Bindemitteldlspersionen hergestellten Überzugsmittel ist die Fahrzeug- und Fahrzeugteilelackierung. Die Überzugsmittel sind sowohl für die Fahrzeugreparatur- als auch die Fahrzeugserienlackierung anwendbar.

Als Substrate sind Metall- und Kunststoffsubstrate, besonders sind die in der Automobilindustrie bekannten Substrate geeignet, z.B. Eisen, Zink, Aluminium, Magnesium oder deren Legierungen sowie Polyurethane, Polycarbonate oder Polyolefine. Die Überzugsmittel sind jedoch auch geeignet zur Lackierung anderer Substrate, wie Glas, Beton oder Holz.

Die mit den erfindungsgemäßen Bindemitteldispersionen formulierten Überzugsmittel zeichnen sich durch eine gute Pigmentbenetzung und gute Lagerstabilität aus. Bei der Herstellung von Mehrschichtüberzügen zeigen die Überzugsmittel eine sehr gute Zwischenschichthaftung. Bei der Formulierung von Metalliclacken wird ein guter Metalliceffekt erzielt.

Die Erfindung soll in den folgenden Beispielen näher erläutert werden. Alle Angaben beziehen sich auf das Gewicht.

## 1. Beispiel

1.1 Herstellung eines PUR-Makromonomeren mit Aminzahl 70

| 1. | 13,063 Teile | Polyester bestehend aus Hexandiol, Adipinsäure, Isophthalsäure |
| | | OH-Zahl 100 |
| | | Säurezahl < 3 mg KOH/g |
| 2. | 6,154 Teile | Methyldiethanolamin |
| 3. | 1,758 Teile | Hydroxyethylmethacrylat |
| 4. | 2,630 Teile | Laurylalkohol |
| 5. | 0,407 Teile | BHT-Stabilisator KB |
| 6. | 17,070 Teile | Isophorondiisocyanat |
| 7. | <u>58,918</u> Teile | Ethoxypropanol |
| | 100,000 | |

In einem sauberen, trockenen mit Deckel, Rührer, Thermometer und Rückflußkühlung ausgestattetem Planschiff-Reaktionsgefäß werden die Positionen 1 bis 5 nacheinander eingewogen und unter Rühren auf 45 - 50°C erwärmt und anschließend 1 Stunde bei dieser Temperatur zur besseren Vermischung nachgerührt.

Die Position 6 muß portionsweise so zudosiert werden, daß bei Einsetzen einer exothermen Reaktion eine Produkttemperatur von maximal 85°C nicht überschritten wird. Nach Zugabeende Ansatz bei einer Reaktionstemperatur von 80°C halten bis die Isocyanatgruppen-Bestimmung einen Wert von <0,3 % ergibt.

Bei der Bestimmung der Kennzahl müssen die im Harz vorliegenden Aminogruppen bei der Berechnung der Isocyanatgruppen-Bestimmung nach DIN 53 185 berücksichtigt werden. Aus diesem Grund ist eine parallele Bestimmung der Aminzahl gemäß DIN 53 176 notwendig.

Nach Erreichen der Isocyanat-Zahl wird der Ansatz bei 80°C mit Position 7 verdünnt und auf einen Festkörper von 41 % eingestellt.

### Kennzahlen

Festkörper 0,5 Stunden/150°C    = 40,7 %
Aminzahl über Festkörper    = 68,3

1.2 Herstellung eines urethanmodifizierten (Meth)acrylcopolymers mit Aminzahl 30/OH-Zahl Monomer 80, wobei die Aminzahl auch über die (Meth)acrylcopolymer eingebracht wird.

| 1. | 8,572 Teile | PUR-Makromonomer entsprechend Beispiel 1 |
|---|---|---|
| 2. | 3,041 Teile | Laurylacrylat |
| 3. | 10,436 Teile | Styrol |
| 4. | 1,500 Teile | Hydroxypropylacrylat |
| 5. | 3,781 Teile | Butylmethacrylat |
| 6. | 4,634 Teile | Isobutylmethacrylat |
| 7. | 4,593 Teile | Butandiolmonoacrylat |
| 8. | 2,279 Teile | Dimethylaminopropylmethacrylat |
| 9. | 1,172 Teile | Butylglykol |
| 10. | 0,390 Teile | 2,2 Azobis(2 Methylbutannitril) |
| 11. | 0,476 Teile | Butylglykol |
| 12. | 0,158 Teile | 2,2 Azobis(2 Methylbutannitril) |
| 13. | 1,75 Teile | Ethoxypropanol |
| 14. | 0,968 Teile | DM-Propionsäure |
| 15. | 56,25 Teile | VE-Wasser |
| | 100,000 | |

In einem sauberen, trockenen mit Deckel, Rührer, Thermometer und Rückflußkühlung ausgestattetem Planschliff-Reaktionsgefäß wird die Position 1 eingewogen und unter Rühren auf 125°C erwärmt.

In der Zwischenzeit wird eine Monomerenmischung bestehend aus Positionen 2 bis 8, sowie eine Initiatorlösung bestehend aus Positionen 9 und 10 in entsprechenden Mischgefäßen hergestellt.

Die Monomerenmischung Positionen 2 - 8 sowie die Initiatorlösung Positionen 9 + 10 werden über einen Zeitraum von 4 Stunden kontinuierlich bei einer Reaktionstemperatur von 125°C zudosiert. Nach Dosierende Ansatz 1 Stunde bei 125°C halten.

In der Zwischenzeit wird eine Initiatorlösung bestehend aus Positionen 11 + 12 in einem Mischgefäß angesetzt.

Um einen vollständigen Umsatz zu erhalten, wird der Ansatz zweimal wie folgt nachinitiiert: Ansatz auf 110°C abkühlen, die erste Hälfte der Initiatorlösung bestehend aus Positionen 11 und 12 zusetzen, exotherme Reaktion abwarten, auf 125°C aufheizen und Ansatz eine Stunde bei 125°C halten.

Anschließend Ansatz mit Position 13 auf einen Festkörper von 80 % einstellen.

Position 14 vorsichtig bei 125°C einstreuen und 0,5 Stunden bei Temperatur halten bis die Säure vollständig gelöst ist, anschließend Ansatz auf 95°C abkühlen. Die auf 80°C temperierte Position 15 kontinuierlich über einen Zeitraum von 0,5 Stunden zudosieren, hierbei fällt die Reaktionstemperatur auf 80°C ab. Nach Zugabeende Ansatz 2 Stunden bei 80°C nachrühren und anschließend auf <30°C abkühlen und filtrieren.

**Endwerte:**

Festkörper 0,5 Stunden/150°C     = 35,4 %
MEQ-Säure über Festkörper       = 23,1
Aminzahl über Festkörper        = 29,2

## 2. Beispiel

2.1 Herstellung eines PUR-Makromonomeren ohne Aminzahl

| 1. | 5,471 Teile | Neopentylglykol |
|---|---|---|
| 2. | 13,288 Teile | Polyester bestehend aus Hexandiol, Adipinsäure, Isophthalsäure OH-Zahl 100, Säurezahl <3 mg KOH/g |
| 3. | 1,788 Teile | Hydroxyethylmethacrylat |
| 4. | 2,675 Teile | Laurylalkohol |
| 5. | 0,414 Teile | BHT-Stabilisator KB |
| 6. | 17,364 Teile | Isophorondiisocyanat |
| 7. | <u>59,000</u> Teile | Ethoxypropanol |
| | 100,000 | |

In einem sauberen, trockenen mit Deckel, Rührer, Thermometer und Rückflußkühlung ausgestattetem Planschiff-Reaktionsgefäß werden die Positionen 1 bis 5 nacheinander eingewogen und unter Rühren auf 45 - 50°C erwärmt und anschließend 1 Stunde bei dieser Temperatur zur besseren Vermischung nachgerührt.

Die Position 6 muß portionsweise so zudosiert werden, daß bei Einsetzen einer exothermen Reaktion eine Produkttemperatur von maximal 85°C nicht überschritten wird. Nach Zugabeende Ansatz bei einer Reaktionstemperatur von 80°C halten bis die Isocyanatgruppen-Bestimmung einen Wert von <0,3 % ergibt.

Bei der Bestimmung der Kennzahlen müssen die im Harz vorliegenden Aminogruppen bei der Berechnung der Isocyanatgruppen-Bestimmung nach DIN 53 185 berücksichtigt werden. Aus diesem Grund ist eine parallele Bestimmung der Aminzahl gemäß DIN 53 176 notwendig.

Nach Erreichen der Isocyanat-Zahl wird der Ansatz bei 80°C mit Position 7 verdünnt und auf einen Festkörper von 41 % eingestellt.

## Kennzahlen:

Festkörper 0,5 Stunden/150°C      = 41,4 %ig in Ethoxypropanol

2.2 Herstellung eines urethanmodifizierten (Meth)acrylcopolymeren mit Aminzahl 30/OH-Zahl 80, wobei die Aminzahl nur über das (Meth)acrylcopolymer eingebracht wird.

| | | |
|---|---|---|
| 1. | 8,591 Teile | PUR-Makromonomer entsprechend Beispiel 2.1. |
| 2. | 2,937 Teile | Laurylacrylat |
| 3. | 10,08 Teile | Styrol |
| 4. | 1,503 Teile | Hydroxypropylacrylat |
| 5. | 3,652 Teile | Butylmethacrylat |
| 6. | 4,476 Teile | Isobutylmethacrylat |
| 7. | 4,603 Teile | Butandiolmonoacrylat |
| 8. | 3,077 Teile | Dimethylaminopropylmethacrylat |
| 9. | 1,175 Teile | Butylglykol |
| 10. | 0,391 Teile | 2,2 Azobis (2 Methylbutannitril) |
| 11. | 0,477 Teile | Butylglykol |
| 12. | 0,159 Teile | 2,2 Azobis (2 Methylbutannitril) |
| 13. | 1,753 Teile | Ethoxypropanol |
| 14. | 0,666 Teile | Ameisensäure 50 %ige Lösung in VEW |
| 15. | 56,46 Teile | VE-Wasser |
| | 100.000 | |

In einem sauberen, trockenen mit Deckel, Rührer, Thermometer und Rückflußkühlung ausgestattetem Planschliff-Reaktionsgefäß wird die Position 1 eingewogen und unter Rühren auf 125°C erwärmt.

In der Zwischenzeit wird eine Monomerenmischung bestehend aus Positionen 2 bis 8, sowie eine Initiatorlösung bestehend aus Positionen 9 und 10 in entsprechenden Mischgefäßen hergestellt.

Die Monomerenmischung Positionen 2 - 8 sowie die Initiatorlösung Positionen 9 + 10 werden über einen Zeitraum von 4 Stunden kontinuierlich bei einer Reaktionstemperatur von 125°C zudosiert. Nach Dosierende Ansatz 1 Stunde bei 125°C halten.

In der Zwischenzeit wird eine Initiatorlösung bestehend aus Positionen 11 + 12 in einem Mischgefäß angesetzt und verrührt bis gelöst.

Um einen vollständigen Umsatz zu erhalten, wird der Ansatz zweimal wie folgt nachinitiiert: Ansatz auf 110°C abkühlen, die erste Hälfte der Initiatorlösung bestehend aus Positionen 11 und 12 zusetzen, exotherme Reaktion abwarten, auf 125°C aufheizen und Ansatz eine Stunde bei 125°C halten.

Anschließend Ansatz mit Position 13 auf einen Festkörper von 80 % einstellen.

Ansatz auf 80 - 85°C abkühlen, Position 14 zusetzen und 0,5 Stunden bei 80 - 85°C nachrühren. Die auf 80°C temperierte Position 15 kontinuierlich über einen Zeitraum von 0,5 Stunden zudosieren, hierbei fällt die Reaktionstemperatur auf 80°C ab. Nach Zugabeende Ansatz 2 Stunden bei 80°C nachrühren und anschließend auf <30°C abkühlen und filtrieren.

**Kennzahlen:**

Festkörper 0,5 Stunden/150°C     = 34,7 %
MEQ-Säure über Festkörper     = 21,8
Aminzahl über Festkörper     = 28,7

## 3. Beispiel

3.1 Herstellung eines PUR-Makromonomer mit Aminzahl 70 (entspricht Beispiel 1 aber mit höherem Festkörper)

| 1. | 22,031 Teile | Polyester bestehend aus Hexandiol, Adipinsäure, Isophthalsäure OH-Zahl 100 Säurezahl <3 mg KOH/g |
|---|---|---|
| 2. | 10,380 Teile | Methyldiethanolamin |
| 3. | 2,964 Teile | Hydroxyethylmethacrylat |
| 4. | 4,435 Teile | Laurylalkohol |
| 5. | 0,686 Teile | BHT-Stabilisator KB |
| 6. | 28,789 Teile | Isophorondiisocyanat |
| 7. | 30,715 Teile | Ethoxypropanol |
| | 100,000 | |

In einem sauberen, trockenen, mit Deckel, Rührer, Thermometer und Rückflußkühlung ausgestatteten Planschliff-Reaktionsgefäß werden die Positionen 1 bis 5 nacheinander eingewogen und unter Rühren auf 45 - 50 °C erwärmt und anschließend 1 Stunde bei dieser Temperatur zur besseren Vermischung nachgerührt.

Die Position 6 muß portionsweise so zudosiert werden, daß bei Einsetzen einer exothermen Reaktion eine Produkttemperatur von max. 85 °C nicht überschritten wird.

Nach Zugabeende Ansatz bei einer Reaktionstemperatur von 80 °C halten bis die Isocyanatgruppen-Bestimmung einen Wert von < 0,3 % ergibt.

Bei der Bestimmung der Kennzahl müssen die im Harz vorliegenden Aminogruppen bei der Berechnung der Isocyanatgruppen-Bestimmung nach DIN 53 185 berücksichtigt werden. Aus diesem Grund ist eine parallele Bestimmung der Aminzahl gemäß DIN 53 176 notwendig.

Nach Erreichen der Isocyanat-Zahl wird der Ansatz bei 80 °C mit Position 7 verdünnt und auf einen Festkörper von 69 % eingestellt.

## Kennzahlen:

Festkörper 0,5 Std./150 °C    = 70.2%ig in Ethoxypropanol
Aminzahl über Festkörper    = 69.9

3.2 Herstellung eines urethanmodifizierten (Meth)acrylcopolymeren, wobei die Aminzahl nur über das PUR-Makromonomer 3.1 eingebracht wird (Aminzahl gesamt bezogen auf Festharz 30/OH-Zahl Monomere 80)

| 1. | 20,383 Teile | PUR-Makromonomer entsprechend Beispiel 3.1 |
|---|---|---|
| 2. | 2,198 Teile | Laurylacrylat |
| 3. | 7,545 Teile | Styrol |
| 4. | 0,982 Teile | Hydroxypropylacrylat |
| 5. | 2,733 Teile | Butylmethacrylat |
| 6. | 3,350 Teile | Isobutylmethacrylat |
| 7. | 3,000 Teile | Butandiolmonoacrylat |
| 8. | 0,768 Teile | Butylglykol |
| 9. | 0,255 Teile | 2,2 Azobis (2 Methylbutannitril) |
| 10. | 0,311 Teile | Butylglykol |
| 11. | 0,104 Teile | 2,2 Azobis (2 Methylbutannitril) |
| 12. | 1,145 Teile | Ethoxypropanol |
| 13. | 0,854 Teile | Essigsäure 50%ige Lösung in VEW |
| 14. | <u>56,372</u> Teile | VE-Wasser |
| | 100,000 | |

In einem sauberen, trockenen, mit Deckel, Rührer, Thermometer und Rückflußkühlung ausgestatteten Planschliff-Reaktionsgefäß wird die Position 1 eingewogen und unter Rühren auf 125 °C erwärmt.

In der Zwischenzeit wird eine Monomermischung bestehend aus Pos. 2 bis 7 sowie eine Initiatorlösung bestehend aus Pos. 8 + 9 in entsprechenden Mischgefäßen hergestellt. Die Monomerenmischung Pos. 2 - 7 sowie die Initiatorlösung Pos. 8 + 9 werden über einen Zeitraum von 4 Stunden kontinuierlich bei einer Reaktionstemperatur von 125 °C zudosiert. Nach Dosierende Ansatz 1 Stunde bei 125 °C halten.

In der Zwischenzeit wird eine Initiatorlösung bestehend aus Pos. 10 + 11 in einem Mischgefäß angesetzt und verrührt bis gelöst.

Um einen vollständigen Umsatz zu erhalten, wird der Ansatz zweimal wie folgt nachinitiiert: Ansatz auf 110 °C abkühlen, die erste Hälfte der Initiatorlösung bestehend aus Pos. 10 + 11 zusetzen, exotherme Reaktion abwarten, auf 125 °C aufheizen und Ansatz eine Stunde bei 125 °C halten.

Anschließend Ansatz mit Pos. 12. auf einen Festkörper von 80 % einstellen.

Ansatz auf 80 - 85 °C abkühlen, Pos. 13 zusetzen und 0.5 Stunden bei 80 - 85 °C nachrühren. Die auf 80 °C temperierte Pos. 14 kontinuierlich über einen Zeitraum von 0.5 Stunden zudosieren, hierbei fällt die Reaktionstemperatur auf 80 °C ab. Nach Zugabeende Ansatz 2 Stunden bei 80 °C nachrühren und anschließend auf < 30 °C abkühlen und filtrieren.

**<u>Kennzahlen:</u>**

Festkörper 0.5 Stunden/150 °C = 35.0%ig
MEQ-Säure über Festkörper = 21,0
Aminzahl über Festkörper = 29,4

**4. Beispiel**

Herstellung von Wasserbasislacken aus Modulbausteinen gemäß WO-A-95/29960)

4.1 Herstellung eines Bindemittelmoduls mit erfindungsgemäßen Bindemitteln

Folgende Bindemittel werden unter Rühren gut miteinander vermischt:

172,0 g eines kationisch modifizierten acrylierten Polyurethan-Bindemittels (hergestellt durch Emulsionspolymerisation) entsprechend WO-A-95/29960 Herstellungsbeispiel 5

28,5 g eines kationisch modifizierten Polyurethan-Bindemittels entsprechend WO-A-95/29960 Herstellungsbeispiel 3

135,1 g eines erfindungsgemäßen Bindemittels entsprechend Beispiel 1

30,0 g VE-Wasser

4.1 Herstellung eines Bindemittelmoduls mit Vergleichsbindemitteln

Folgende Bindemittel werden unter Rühren gut miteinander vermischt:

172,0 g eines kationisch modifizierten acrylierten Polyurethan-Bindemittels (hergestellt durch Emulsionspolymerisation) entsprechend WO-A-95/29960 Herstellungsbeispiel 5

28,5 g eines kationisch modifizierten Polyurethan-Bindemittels entsprechend WO-A-95/29960 Herstellungsbeispiel 3

234,5 g eines Aminoacrylat-Bindemittels entsprechend WO-A-95/29960 Herstellungsbeispiel 1

30,0 g VE-Wasser

4.2 Herstellung eines Effektmoduls

Folgende Bestandteile werden miteinander vermischt:

8,4 g einer handelsüblichen für Wasserbasislack geeigneten Aluminiumpaste mit 65 % Aluminium

0,8 g eines Aluminiumbenetzungsadditivs auf der Basis organischer Phosphorsäurederivate

4,9 g Butylglykol

2,0 g N-Methylpyrrolidon

4,5 g n-Butanol

8,0 g eines kationisch modifizierten PUR-Acryl-Bindemittels entsprechend WO-A-95/29960 Herstellungsbeispiel 5

4.3 Herstellung eines Rheologiemoduls

Es wird ein Rheologiemodul entsprechend WO-A-95/29960 (Rheologiemodul I) hergestellt.
Die einzelnen Module werden entsprechend der Mengenangaben in der folgenden Tabelle miteinander vermischt.

|  | erfindungsgemäßer Wasserbasislack | Vergleichs-Wasserbasislack |
|---|---|---|
| erfindungsgemäßes Bindemittelmodul | 68,9 Teile |  |
| Vergleichs-Bindemittelmodul |  | 68,9 Teile |
| Effektmodul | 15,0 Teile | 15,0 Teile |
| Rheologiemodul | 8,5 Teile | 8,5 Teile |

Ein Vergleich der lacktechnischen Eigenschaften ist der folgenden Tabelle zu entnehmen.

|  | erfindungsgemäßer Wasserbasislack | Vergleichs-Wasserbasislack |
|---|---|---|
| Metallic-Effekt | 1 - 2 | 3 |
| Haftung (Gitterschnitt) | 1 | 2 |
| Lagerstabilität | separieren nach 6 Monaten | separieren nach 2 Monaten |
| 1 - sehr gut<br>2 - gut<br>3 - befriedigend | | |

**Patentansprüche**

1. Wasserverdünnbare Dispersion eines oder mehrerer kationisch modifizierter und urethanmodifizierter (Meth)acrylcopolymerer, welche erhältlich sind durch Lösungspolymerisation von

   A) radikalisch polymerisierbaren ungesättigten Monomeren oder einem Gemisch radikalisch polymerisierbarer ungesättigter Monomere, die gegebenenfalls mit kationischen oder in kationische Gruppen überführbaren Gruppen modifiziert sind, in Gegenwart

   B) eines oder mehrerer Polyurethanmakromonomerer mit ungesättigten Gruppen, wobei das Polyurethanmakromonomer erhältlich ist durch Umsetzung

   b1) eines oder mehrerer gegebenenfalls polymerisierbare Doppelbindungen aufweisender Mono- und/oder Polyhydroxylverbindungen mit

   b2) einem oder mehreren Polyisocyanaten,

   b3) gegebenenfalls einer Verbindung, die mindestens eine gegenüber Isocyanatgruppen reaktive und mindestens eine zur Kationenbildung befähigte Gruppe im Molekül aufweisen oder mit einem Gemisch aus solchen Verbindungen,

   b4) gegebenenfalls einer Verbindung, die neben einer polymerisierbaren Doppelbindung mindestens eine gegenüber NCO-Gruppen reaktive Gruppe enthält oder mit einem Gemisch aus solchen Verbindungen und

   b5) gegebenenfalls einer Verbindung, die eine gegenüber Isocyanatgruppen reaktive Gruppe und einen linearen oder verzweigten (cyclo)aliphatischen Kohlenwasserstoffrest mit 5 bis 20 C-Atomen enthält oder einem Gemisch aus solchen Verbindungen,

   wobei durch mindestens eine der Komponenten b1) und b4) polymerisierbare Doppelbindungen in das Polyurethanmakromonomer eingeführt werden, die Komponenten b1) bis b5) so ausgewählt werden, daß ein Polyurethanmakromonomer mit terminalen und/oder lateralen ungesättigten Gruppen entsteht und die kationischen oder in kationische Gruppen überführbaren Gruppen des urethanmodifizierten (Meth)acrylcopolymeren über die radikalisch polymerisierbaren ungesättigten Monomere A) und/oder das Polyurethanmakromonomer B) eingeführt werden und anschließende Überführung des Reaktionsproduktes in die wäßrige Phase, wobei die im Reaktionsprodukt enthaltenen kationischen oder in kationische Gruppen überführbaren Gruppen vor oder während der Überführung in die Wasserphase zumindest teilweise neutralisiert werden.

2. Dispersion nach Anspruch 1, dadurch gekennzeichnet, daß 60 bis 95 Gew.-% radikalisch polymerisierbare Monomere in Gegenwart von 5 bis 40 Gew.-% Polyurethanmakromonomer polymerisiert werden, wobei die Summe der Bestandteile, jeweils auf den Festkörpergehalt bezogen, 100 Gew.-% beträgt.

3. Dispersion nach Anspruch 1 oder 2, dadurch gekennzeichnet, daß als Komponente a1) Hydroxyethyl(meth)acrylat, Hydroxypropyl(meth)acrylat und/oder Hydroxybutyl(meth)acrylat verwendet werden.

4. Dispersion nach einem oder mehreren der Ansprüche 1 bis 3, dadurch gekennzeichnet, daß das Polyurethanmakromonomer aus B) ein zahlenmittleres Molekulargewicht Mn von 2000 bis 20000, im statistischen Mittel 0,2 bis 1,5 polymerisierbare Doppelbindungen pro Molekül und eine Aminzahl von 0 bis 100 mgKOH/g aufweist.

5. Verfahren zur Herstellung einer wasserverdünnbaren Dispersion eines oder mehrerer kationisch modifizierter und urethanmodifizierter (Meth)acrylcopolymerer, dadurch gekennzeichnet, daß durch Lösungspolymerisation

   A) radikalisch polymerisierbare ungesättigte Monomere oder ein Gemisch polymerisierbarer ungesättigter Monomere, die gegebenenfalls mit kationischen oder in kationische Gruppen überführbaren Gruppen modifiziert sind, in Gegenwart

   B) eines oder mehrer Polyurethanmakromonomerer mit ungesättigten Gruppen polymerisiert werden, wobei das Polyurethanmakromonomer erhältlich ist durch Umsetzung

   b1) eines oder mehrerer gegebenenfalls polymerisierbare Doppelbindungen aufweisender Mono- und/oder Polyhydroxylverbindungen mit

   b2) einem oder mehreren Polyisocyanaten,

   b3) gegebenenfalls einer Verbindung, die mindestens eine gegenüber Isocyanatgruppen reaktive und mindestens eine zur Kationenbildung befähigte Gruppe im Molekül aufweisen oder mit einem Gemisch aus solchen Verbindungen,

   b4) gegebenenfalls einer Verbindung, die neben einer polymerisierbaren Doppelbindung mindestens eine gegenüber NCO-Gruppen reaktive Gruppe enthält oder mit einem Gemisch aus solchen Verbindungen und

   b5) gegebenenfalls einer Verbindung, die eine gegenüber Isocyanatgruppen reaktive Gruppe und einen linearen oder verzweigten (cyclo)aliphatischen Kohlenwasserstoffrest mit 5 bis 20 C-Atomen enthält oder einem Gemisch aus solchen Verbindungen,

   wobei durch mindestens eine der Komponenten b1) und b4) polymerisierbare Doppelbindungen in das Polyurethanmakromonomer eingeführt werden, die Komponenten b1) bis b5) so ausgewählt werden, daß ein Polyurethanmakromonomer mit terminalen und/oder lateralen ungesättigten Gruppen entsteht und die kationischen oder in kationische Gruppen überführbaren Gruppen des urethanmodifizierten (Meth)acrylcopolymeren über die radikalisch polymerisierbaren ungesättigten Monomere A) und/oder das Polyurethanmakromonomer B) eingeführt werden und wobei das Reaktionsprodukt anschließend überführt wird, wobei die im Reaktionsprodukt enthaltenen kationischen oder in kationische Gruppen überführbaren Gruppen vor oder während der Überführung in die Wasserphase zumindest teilweise neutralisiert werden.

6. Wasserverdünnbare Überzugsmittel enthaltend die Dispersion nach einem oder mehreren der Ansprüche 1 bis 4, Wasser und gegebenenfalls organische Lösemittel, Pigmente und/oder Füllstoffe sowie lackübliche Additive.

7. Verfahren zur Herstellung einer Mehrschichtlackierung durch Auftrag einer Basisschicht aus einem wäßrigen Überzugsmittel auf ein gegebenenfalls vorbeschichtetes Substrat und anschließendem Auftrag einer transparenten Deckschicht, dadurch gekennzeichnet, daß als wäßriges Überzugsmittel für die Basisschicht ein Überzugsmittel nach Anspruch 6 verwendet wird.

Europäisches
Patentamt

**EUROPÄISCHER RECHERCHENBERICHT**

Nummer der Anmeldung

EP 97 10 4848

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 584 970 A (W.R.GRACE & CO.-CONN.)<br>* Seite 5, Zeile 25 - Zeile 40; Ansprüche 1,10,14-16 *<br>--- | 1-6 | C08G18/67<br>C09D175/16 |
| X | GB 2 270 916 A (SERICOL LTD.)<br>* Ansprüche 1,3,11,16; Beispiel 1 *<br>--- | 1-6 | |
| X | EP 0 443 537 A (TAKEDA CHEMICAL INDUSTRIES, LTD.)<br>* Ansprüche 1,2,9,10,13,14 *<br>--- | 1-6 | |
| X | EP 0 207 570 A (AKZO N.V.)<br>* Ansprüche 1-3,14,15 *<br>--- | 1-6 | |
| A<br>D | DE 44 15 292 A (HERBERTS GMBH)<br>* Ansprüche 1,2,7,8,10,11,25 *<br>& WO 95 29960 A<br>----- | 1-7 | |
| | | | **RECHERCHIERTE SACHGEBIETE (Int.Cl.6)**<br><br>C08G<br>C09D |

Der vorliegende Recherchenbericht wurde für alle Patentansprüche erstellt

| Recherchenort | Abschlußdatum der Recherche | Prüfer |
|---|---|---|
| BERLIN | 7.Juli 1997 | Angiolini, D |